# EUROPÄISCHE PATENTSCHRIFT

(11) **EP 0 855 977 B1**
(45) Veröffentlichungstag und Bekanntmachung des Hinweises auf die Patenterteilung: **10.10.2001**
(21) Anmeldenummer: 97923919.1
(22) Anmeldetag: 16.05.1997
(51) Int. Cl.: B60T 13/72

(54) **PNEUMATISCHER BREMSKRAFTVERSTÄRKER**
PNEUMATIC POWER BRAKE
SERVOFREIN PNEUMATIQUE

(30) Priorität: 17.05.1996 DE 19619954
(43) Veröffentlichungstag der Anmeldung: 05.08.1998
(73) Patentinhaber: Continental Teves AG & Co. oHG, 60488 Frankfurt (DE)
(72) Erfinder: SCHONLAU, Jürgen, D-65396 Walluf (DE); BÖHM, Peter, D-61381 Friedrichsdorf (DE); PETERKNECHT, Walter, D-61273 Wehrheim (DE)
(74) Vertreter: Dusil, Vladimir, Dipl.-Ing.
(86) Internationale Anmeldenummer: EP9702517
(87) Internationale Veröffentlichungsnummer: WO9744228

(56) Entgegenhaltungen:
- EP-A- 0 616 932
- WO-A-95/12511
- WO-A-95/32879
- DE-A- 3 027 378

## Beschreibung

Die Erfindung betrifft einen pneumatischen Bremskraftverstärker für Kraftfahrzeuge mit einem Verstärkergehäuse, dessen Innenraum durch eine bewegliche Wand in eine erste Kammer (Unterdruckkammer) und eine zweite Kammer (Arbeitskammer) unterteilt ist, sowie mit einem Steuergehäuse, in dem ein eine auf die bewegliche Wand einwirkende pneumatische Druckdifferenz steuerndes Steuerventil angeordnet ist, das mindestens zwei mit einem elastischen Ventilkörper zusammenwirkende Dichtsitze aufweist, von denen einer einerseits durch eine Betätigungsstange und andererseits unabhängig von der Betätigungsstange durch einen Elektromagneten betätigbar ist, wobei im Verstärkergehäuse eine Kabeldurchführung luftdicht angeordnet ist, durch die sich elektrische Leitungen in das Innere des Verstärkergehäuses hindurch erstrecken.

Ein derartiger Bremskraftverstärker ist z.B. aus der internationalen Patentanmeldung WO 95/32879 bekannt. Bei dem vorbekannten Bremskraftverstärker ist die nur von außen montierbare Kabeldurchführung als Meßglied eines Wegaufnehmers ausgebildet, der der Sensierung der Bewegung der beweglichen Wand des Bremskraftverstärkers dient. Zur hermetischen Abdichtung der Kabeldurchführung gegenüber dem Verstärkergehäuse ist ein Dichtring vorgesehen, der in einer Öffnung des Verstärkergehäuses eingeknöpft ist.

Als nachteilig ist bei dem vorbekannten Bremskraftverstärker die Tatsache anzusehen, daß bei einem Ausknöpfen des Dichtringes aus dem Verstärkergehäuse bzw. einer Schrägstellung der bekannten Kabeldurchführung im Dichtring eine Belüftung der Unterdruckkammer des Bremskraftverstärkers auftreten kann, die zu einem Ausfall der Verstärkungskraft führt. Außerdem muß bei der Montage des Bremskraftverstärkers innerhalb des Verstärkergehäuses eine elektrische Verbindung hergestellt werden, die die Stromzufuhr zum Elektromagneten und weiteren Bauteilen gewährleistet.

Es ist daher Aufgabe der vorliegenden Erfindung, Maßnahmen vorzuschlagen, durch die die Betriebssicherheit des Bremskraftverstärkers erhöht werden kann. Außerdem sollen eine einfache Montage ohne zusätzliche elektrische Verbindungen innerhalb des Gerätes und eine hohe Zuverlässigkeit der Gesamtanordnung im Betrieb gewährleistet sein. Weiterhin soll eine Überprüfung der Funktion der elektrischen Anordnung vor dem Zusammenbau des Bremskraftverstärkers ermöglicht werden.

Diese Aufgabe wird erfindungsgemäß dadurch gelöst, daß die Kabeldurchführung im Verstärkergehäuse mittels einer Bajonettverbindung gehalten wird und aus einem in das Verstärkergehäuse von innen einführbaren Aufnahmekörper sowie einem mit dem Aufnahmekörper zusammenwirkenden Bajonettring besteht, der unter Zwischenschaltung eines Dichtelementes am Verstärkergehäuse anliegt. Der Bajonettring weist dabei mindestens einen radial nach innen gerichteten Vorsprung auf, der in mindestens eine auf dem Aufnahmekörper ausgebildete Nut einführbar ist.

Um eine wirksame Abdichtung der beiden Teile der erfindungsgemäßen Kabeldurchführung gegeneinander zu gewährleisten ist bei einer vorteilhaften Weiterbildung der Erfindung vorgesehen, daß der Aufnahmekörper mit einer radialen Ringnut versehen ist, die ein den Aufnahmekörper gegenüber dem Bajonettring abdichtendes Dichtelement aufnimmt.

Um eine möglichst definierte Führung der elektrischen Leitungen im Inneren des Bremskraftverstärkergehäuse zu erreichen weist der Aufnahmekörper eine am Verstärkergehäuse anliegende radiale Erweiterung auf, auf der eine der Positionierung der elektrischen Leitungen dienende Halteklemme vorgesehen ist. Außerdem ist es sinnvoll, wenn der Aufnahmekörper mit einer Verdrehsicherung versehen ist, die vorzugsweise durch einen auf der dem Verstärkergehäuse zugewandten Seite der Erweiterung angeformten Vorsprung gebildet ist, der in eine im Verstärkergehäuse ausgebildete Ausnehmung eingreift.

Die Erfindung wird in der nachfolgenden Beschreibung an einem Ausführungsbeispiel im Zusammenhang mit der beiliegenden Zeichnung näher erläutert. In der Zeichnung zeigt:
- Fig. 1: einen Längsschnitt des erfindungsgemäßen Bremskraftverstärkers in einer Teilansicht, und
- Fig. 2: den Aufnahmekörper der bei dem Bremskraftverstärker nach Fig. 1 vorgesehenen Kabeldurchführung.

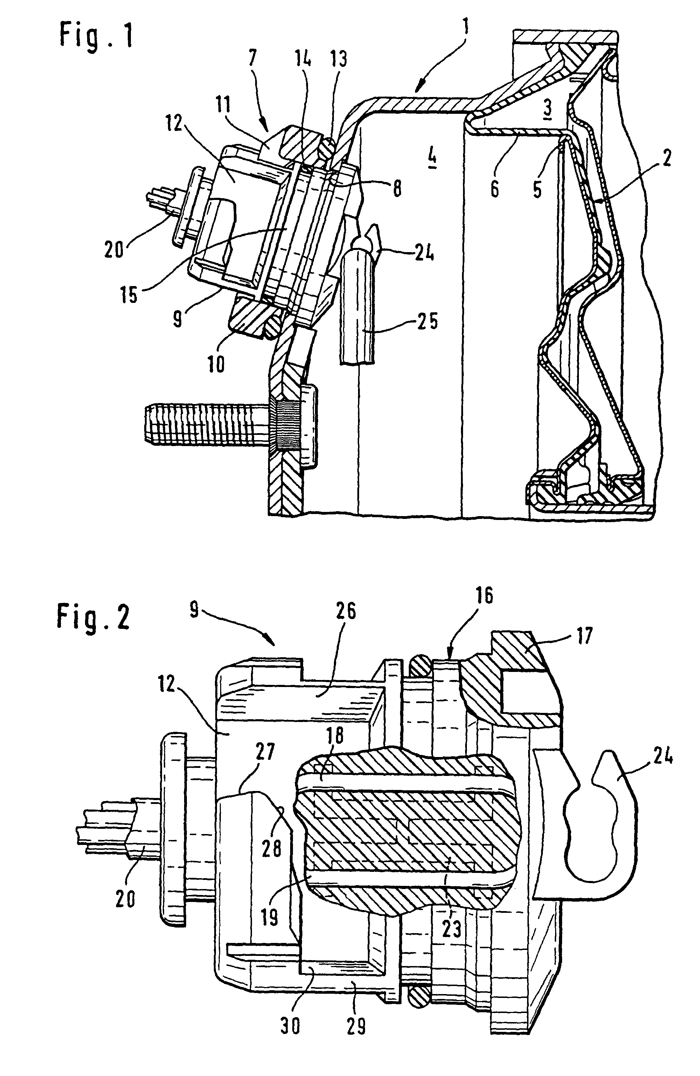

Das in Fig. 1 lediglich schematisch angedeutete Verstärkergehäuse 1 des in der Zeichnung dargestellten erfindungsgemäßen Unterdruckbremskraftverstärkers ist durch eine axial bewegliche Wand 2 in eine Arbeitskammer 3 und eine Unterdruckkammer 4 unterteilt. Die axial bewegliche Wand 2 besteht aus einem kreisrunden, kraftübertragenden, aus Blech tiefgezogenen Membranteller 5 und einer daran anliegenden, aus einem gummiähnlichen Material bestehenden flexiblen Membran 6, die zwischen dem äußeren Umfang des Membrantellers 5 und dem Verstärkergehäuse 1 eine Rollmembran als Abdichtung bildet. In der Mitte des Membrantellers 5 sowie der Membran 6 sind die beiden Teile mit einem nicht gezeigten, ein ebenso nicht gezeigtes Steuerventil aufnehmenden Steuergehäuse verbunden.

Eine allgemein mit 7 bezeichnete, vorzugsweise zweiteilige Kabeldurchführung ist in einer vorzugsweise in der in der Zeichnung links dargestellten Verstärkergehäusehälfte ausgebildeten Öffnung 8 verdrehsicher aufgenommen und besteht im wesentlichen aus einem zylindrischen Aufnahmekörper 9 sowie einem den Aufnahmekörper 9 umgreifenden Bajonettring 10, dessen radial nach innen gerichtetete Vorsprünge 11 mit im Aufnahmekörper 9 ausgebildeten Nuten 12 zusammenwirken bzw. eine Bajonettverbindung bilden, die die Kabeldurchführung 7 im Verstärkergehäuse 1 hält. Eine wirksame Abdichtung der Kabeldurchführung 7 gegenüber dem Verstärkergehäuse 1 stellt ein Dichtring 13 sicher, der bei der Montage der erfindungsgemäßen Kabeldurchführung 7 zwischen der Oberfläche des Verstärkergehäuses 1 und der dem Verstärkergehäuse 1 zugewandten Stirnfläche des Bajonettringes 10 axial verpreßt wird. Für eine Abdichtung des Aufnahmekörpers 9 gegenüber dem Bajonettring 10 sorgt ein zweiter Dichtring 14, der in einer im Aufnahmekörper 9 ausgebildeten Radialnut 15 angeordnet ist.

Wie insbesondere Fig. 2 zu entnehmen ist, hat der vorhin erwähnte Aufnahmekörper 9 eine im wesentlichen zylindrische Gestalt und weist einen von innen durch das Verstärkergehäuse 1 im Bereich der Öffnung 8 hindurchragenden Abschnitt 16 auf, der in eine radiale Erweiterung 17 größeren Durchmessers übergeht, die im montierten Zustand der Kabeldurchführung innerhalb der Unterdruckkammer 4 am Verstärkergehäuse 1 anliegt. Der Verdrehsicherung des Aufnahmekörpers 9 in der Öffnung 8 dient ein von der Erweiterung 17 axial abstehender, nicht gezeigter Vorsprung, der von einer am Rand der Öffnung 8 ausgebildeten Ausnehmung aufgenommen wird. Außerdem ist an der Stirnseite der Erweiterung 17 eine Halteklemme 24 angeformt, die der Positionierung des ins Innere des Verstärkergehäuses 1 sich hinein erstreckenden Kabelabschnitts 25 dient.

Aus dem vorzugsweise als Teilschnitt dargestellten mittleren Bereich des in Fig. 2 dargestellten Aufnahmekörpers 9 ist zu erkennen, daß mehrere, zu einem elektrischen Kabelstrang 20 zusammengefaßte Leitungen 18, 19, sich ohne Unterbrechung durch den Aufnahmekörper 9 hindurch erstrecken.

Bei der Herstellung des erfindungsgemäßen Aufnahmekörpers 9 werden mehrere, beispielsweise fünf, Leitungen auf einen in der Zeichnung gestrichelt angedeuteten Haltekörper 23 aufgeknöpft, der im Querschnitt vorzugsweise sternförmig ausgebildet ist. Auf die so vorbereitete Anordnung wird anschließend in einem geeigneten Spritzwerkzeug Kunststoff aufgespritzt.

Bei der Montage der erfindungsgemäßen Kabeldurchführung wird zunächst der aus dem Verstärkergehäuse 1 nach außen hinausragende Abschnitt 16 des Aufnahmekörpers 9 von innen durch die Öffnung 8 hindurchgesteckt und so positioniert, daß der nicht gezeigte, der Verdrehsicherung des Aufnahmekörpers 9 dienende Vorsprung in die im Verstärkergehäuse 1 ausgebildete Ausnehmung eingreift und der Aufnahmekörper 9 mit seiner radialen Erweiterung 17 am Verstärkergehäuse 1 zur Anlage kommt. Dann wird um den Aufnahmekörper 9 der vorhin erwähnte Dichtring 13 gelegt, wonach auf den Aufnahmekörper 9 der Bajonettring 10 so aufgesteckt wird, daß die eingangs beschriebenen Vorsprünge 11 in die Nuten 12 im Aufnahmekörper 9 eingeführt werden. Da jeweils eine (27) der Nutenflanken 26, 27 in eine Schräge 28 übergeht, bewirkt ein Drehen des Bajonettringes 10 im Uhrzeigersinn, während dessen die Vorsprünge 11 entlang der Schrägen 28 bewegt werden, ein Festziehen der Bajonettverbindung unter gleichzeitigem Verpressen des Dichtringes 13, so daß die erfindungsgemäße Kabeldurchführung gegenüber dem Verstärkergehäuse 1 einwandfrei abgedichtet ist. Am Ende der beschriebenen Drehbewegung liegen die Vorsprünge 11 an jeweils einem Anschlag 30 an, der durch jeweils eine die Nuten 12 begrenzende radiale Rippe 29 gebildet ist.

### Bezugszeichenliste:

- 1: Verstärkergehäuse
- 2: bewegliche Wand
- 3: Arbeitskammer
- 4: Unterdruckkammer
- 5: Membranteller
- 6: Rollmembran
- 7: Kabeldurchführung
- 8: Öffnung
- 9: Aufnahmekörper
- 10: Bajonettring
- 11: Vorsprung
- 12: Nut
- 13: Dichtring
- 14: Dichtring
- 15: Ringnut
- 16: Abschnitt
- 17: Erweiterung
- 18: Leitung
- 19: Leitung
- 20: Kabel
- 23: Haltekörper
- 24: Halteklemme
- 25: Kabelabschnitt
- 26: Nutflanke
- 27: Nutflanke
- 28: Schräge
- 29: Rippe
- 30: Anschlag

## Patentansprüche

1. Pneumatischer Bremskraftverstärker für Kraftfahrzeuge mit einem Verstärkergehäuse, dessen Innenraum durch eine bewegliche Wand in eine erste Kammer und eine zweite Kammer unterteilt ist, sowie mit einem Steuergehäuse, in dem ein eine auf die bewegliche Wand einwirkende pneumatische Druckdifferenz steuerndes Steuerventil angeordnet ist, das mindestens zwei mit einem elastischen Ventilkörper zusammenwirkende Dichtsitze aufweist, von denen einer einerseits durch eine Betätigungsstange und andererseits unabhängig von der Betätigungsstange durch einen Elektromagneten betätigbar ist, wobei im Verstärkergehäuse eine Kabeldurchführung luftdicht angeordnet ist, durch die elektrische Leitungen in das Innere des Verstärkergehäuses sich hindurch erstrecken, **dadurch gekennzeichnet, daß** die Kabeldurchführung (7) im Verstärkergehäuse (1) mittels einer Bajonettverbindung (11,12) gehalten wird und aus einem in das Verstärkergehäuse (1) von innen einführbaren Aufnahmekörper (9) sowie einem mit dem Aufnahmekörper (9) zusammenwirkenden Bajonettring (10) besteht, der unter Zwischenschaltung eines Dichtelementes (13) am Verstärkergehäuse (1) anliegt.

2. Bremskraftverstärker nach Anspruch 1 **dadurch gekennzeichnet, daß** der Bajonettring (10) mindestens einen radial nach innen gerichteten Vorsprung (11) aufweist, der in mindestens eine auf dem Aufnahmekörper (9) ausgebildete Nut (12) einführbar ist.

3. Bremskraftverstärker nach Anspruch 1 oder 2 **dadurch gekennzeichnet, daß** der Aufnahmekörper (9) mit einer radialen Ringnut (15) versehen ist, die ein den Aufnahmekörper (9) gegenüber dem Bajonettring (10) abdichtendes Dichtelement (14) aufnimmt.

4. Bremskraftverstärker nach einem der vorhergehenden Ansprüche **dadurch gekennzeichnet, daß** der Aufnahmekörper (9) eine am Verstärkergehäuse (1) anliegende radiale Erweiterung (17) aufweist, auf der eine der Positionierung der elektrischen Leitungen (18,19 bzw. 25) dienende Halteklemme (24) vorgesehen ist.

5. Bremskraftverstärker nach einem der vorhergehenden Ansprüche **dadurch gekennzeichnet, daß** der Aufnahmekörper (9) mit einer Verdrehsicherung versehen ist.

6. Bremskraftverstärker nach Anspruch 5 **dadurch gekennzeichnet, daß** der Aufnahmekörper (9) auf der dem Verstärkergehäuse (1) zugewandten Seite der Erweiterung (17) einen Vorsprung aufweist, der in eine im Verstärkergehäuse (1) ausgebildeten Ausnehmung eingreift.

## Claims

1. Pneumatic brake force booster for automotive vehicles with a booster housing whose interior is subdivided by a movable wall into a first chamber and a second chamber, as well as with a control housing accommodating a control valve which controls the pneumatic pressure differential that acts on the movable wall and which includes at least two sealing seats that cooperate with an elastic valve member, one of the sealing seats being operable by an operating rod, on the one hand, and irrespective of the operating rod by an electromagnet, on the other hand, and a cable duct is air-tightly arranged in the booster housing through which electric lines extend into the interior of the booster housing,
**characterized in that** the cable duct (7) in the booster housing (1) is retained by means of a bayonet joint (11, 12) and is comprised of an accommodating member (9) that can be inserted from inwards into the booster housing (1) and a bayonet ring (10) which cooperates with the accommodating member (9) and, by the intermediary of a sealing element (13), bears against the booster housing (1).

2. Brake force booster as claimed in claim 1,
**characterized in that** the bayonet ring (10) has at least one radially inwards directed projection (11) which can be inserted into at least one groove (12) provided on the accommodating member (9).

3. Brake force booster as claimed in claim 1 or claim 2,
**characterized in that** the accommodating member (9) includes a radial annular groove (15) which receives a sealing element (14) that seals the accommodating member (9) in relation to the bayonet ring (10).

4. Brake force booster as claimed in any one of the preceding claims,
**characterized in that** the accommodating member (9) includes a radial extension (17) which abuts on the booster housing (1) and on which a retaining clip (24) is provided which serves for positioning the electric lines (18, 19, or 25).

5. Brake force booster as claimed in any one of the preceding claims,
**characterized in that** the accommodating member (9) has a rotation-preventing mechanism (9).

6. Brake force booser as claimed in claim 5,
**characterized in that** the accommodating member (9) has a projection shaped on the side of the extension (17) facing the booster housing (1), the said projection engaging into a recess provided in the booster housing (1).

## Revendications

1. Amplificateur de force de freinage de type pneumatique, pour véhicule automobile, comprenant un boîtier d'amplificateur, dont la cavité est divisée au moyen d'une paroi mobile en une première chambre et une seconde chambre, et un boîtier de commande dans lequel est disposée une valve de commande qui commande une différence de pression pneumatique s'exerçant sur la paroi mobile et qui comporte au moins deux sièges d'étanchéité qui coopèrent avec un obturateur élastique et dont l'un peut d'une part être actionné par une tige d'actionnement et d'autre part, indépendamment de la tige d'actionnement, par un électro-aimant, tandis qu'il est prévu, disposé dans le boîtier d'amplificateur d'une manière étanche à l'air, un passage de câble à travers lequel des conducteurs électriques s'étendent jusqu'à l'intérieur du boîtier d'amplificateur, **caractérisé en ce que** le passage de câble (7) est maintenu dans le boîtier d'amplificateur (1) au moyen d'une fixation du type baïonnette (11, 12) et est constitué d'un corps récepteur (9), pouvant être introduit de l'intérieur dans le boîtier d'amplificateur (1), et d'un anneau de baïonnette (10) qui coopère avec le corps récepteur (9) et qui est appliqué en appui sur le boîtier d'amplificateur (1) moyennant l'interposition d'un élément d'étanchéité (13).

2. Amplificateur de force de freinage suivant la revendication 1, **caractérisé en ce que** l'anneau de baïonnette (10) comporte au moins une partie en saillie (11) qui est orientée radialement vers l'intérieur et qui peut être introduite dans au moins une rainure (12) ménagée sur le corps récepteur (9).

3. Amplificateur de force de freinage suivant la revendication 1 ou 2, **caractérisé en ce que** le corps récepteur (9) est pourvu d'une gorge annulaire radiale (15) qui reçoit un élément d'étanchéité (14) assurant l'étanchéité du corps récepteur (9) vis-à-vis de l'anneau de baïonnette (10).

4. Amplificateur de force de freinage suivant l'une des revendications précédentes, **caractérisé en ce que** le corps récepteur (9) comporte une partie plus large radialement (17) qui est appliquée en appui sur le boîtier d'amplificateur (1) et sur laquelle est prévue une pince de maintien (24) servant au positionnement des conducteurs électriques (18, 19 ou 25).

5. Amplificateur de force de freinage suivant l'une des revendications précédentes, **caractérisé en ce que** le corps récepteur (9) est pourvu de moyens de blocage en rotation.

6. Amplificateur de force de freinage suivant la revendication 5, **caractérisé en ce que** le corps récepteur (9) comporte une partie en saillie qui est située sur la face de la partie plus large (17) tournée vers le boîtier d'amplificateur (1) et qui s'emboîte dans un logement ménagé dans le boîtier d'amplificateur (1).
